# EUROPEAN PATENT APPLICATION

(11) **EP 4 651 499 A1**
(43) Date of publication of application: **19.11.2025**
(21) Application number: 24752765.8
(22) Date of filing: 31.01.2024
(51) Int. Cl.: H04N 21/234

(54) **VIDEO GENERATION METHOD, APPARATUS AND STORAGE MEDIUM**

(30) Priority: 08.02.2023 CN 202310133922
(71) Applicant: Huawei Technologies Co., Ltd., Shenzhen, Guangdong 518129 (CN)
(72) Inventor: WANG, Yaoyuan, Shenzhen, Guangdong 518129 (CN); ZHANG, Ziyang, Shenzhen, Guangdong 518129 (CN); HE, Weihua, Shenzhen, Guangdong 518129 (CN); WANG, Xianyu, Shenzhen, Guangdong 518129 (CN); ZHANG, Jingyi, Shenzhen, Guangdong 518129 (CN); LOU, Yihang, Shenzhen, Guangdong 518129 (CN)
(74) Representative: Grünecker Patent- und Rechtsanwälte PartG mbB
(86) International application number: PCT/CN2024/074955
(87) International publication number: WO 2024/164909

(57) **Abstract**

This application relates to a video generation method and apparatus, and a storage medium. The method includes: obtaining a target person image of a target person, target audio that is set for the target person, and a preset driving video, where a face of a person in the driving video is dynamic; migrating a dynamic facial feature of the person in the driving video to the target person image to obtain a target person dynamic video, where a face of the target person in the target person dynamic video is dynamic; generating a lip synchronization video based on the target audio and the target person dynamic video, where a dynamic facial feature in the lip synchronization video is synchronous with the target audio; and enhancing the dynamic facial feature in the lip synchronization video and image quality of the lip synchronization video based on the target person image to obtain a target person lip synchronization video. According to embodiments of this application, a single target person image can be driven by using any audio and any video, and the target person lip synchronization video with high image quality and high lip synchronization can be effectively generated.

## Description

This application claims priority to Chinese Patent Application No. 202310133922.9, filed with the China National Intellectual Property Administration on February 8, 2023 and entitled "VIDEO GENERATION METHOD AND APPARATUS, AND STORAGE MEDIUM", which is incorporated herein by reference in its entirety.

### TECHNICAL FIELD

This application relates to the field of computer technologies, and in particular, to a video generation method and apparatus, and a storage medium.

### BACKGROUND

With development of artificial intelligence technologies, a virtual digital human technology used to simulate appearances, words, and behaviors of real humans is a prerequisite for implementing a concept of "metaverse". Because quality of the virtual digital human technology depends on user experience, a high human-like degree and high visualization precision are basic requirements of the virtual digital human technology.

However, in a conventional virtual digital human technology, to implement generation of a virtual human of a real human, a large amount of video data of the real human needs to be recorded to train a virtual human generation model, so that a virtual human generated by using a trained virtual human generation model has desirable human-like effect. In addition, the virtual human is usually presented to a user in a form of a video, and quality of the video depends on a pixel size of each frame of image. The virtual human generation model is quite complex, and feature learning of a high-definition image greatly increases computing consumption, whereas computing resources of a device are limited. As a result, image quality of a virtual digital human video output by using the virtual human generation model is low, the video is not lifelike enough, and a generalization capability is poor.

### SUMMARY

In view of this, a video generation method and apparatus, and a storage medium are proposed.

According to a first aspect, an embodiment of this application provides a video generation method. The method includes: obtaining a target person image of a target person, target audio that is set for the target person, and a preset driving video, where a face of a person in the driving video is dynamic; migrating a dynamic facial feature of the person in the driving video to the target person image to obtain a target person dynamic video, where a face of the target person in the target person dynamic video is dynamic, and the dynamic facial feature includes at least one of the following: an expression, a motion, and a lip shape; generating a lip synchronization video based on the target audio and the target person dynamic video, where a dynamic facial feature in the lip synchronization video is synchronous with the target audio; and enhancing the dynamic facial feature in the lip synchronization video and image quality of the lip synchronization video based on the target person image to obtain a target person lip synchronization video.

According to this embodiment of this application, a single target person image can be driven by using any audio and any video, and a target person lip synchronization video of a target person can be generated. To be specific, dynamic facial feature migration, lip synchronization, feature enhancement, and image quality enhancement are sequentially performed by using the single target person image of the target person, the target audio, and the driving video, to generate the target person lip synchronization video with high image quality and high lip synchronization. This is equivalent to generating a virtual digital human video of the target person, and enables a person image, audio, and a video to be decoupled from a model. In this way, a virtual dynamic figure of the target person can be generated without collecting a large quantity of customized sample videos of the target person to train a specific model to generate the virtual digital human video, and a migration generalization capability is high. Especially, by using dynamic facial feature enhancement and image quality enhancement processes, the virtual dynamic figure in the target person lip synchronization video can be more lifelike and image quality can be higher, that is, definition and precision are higher.

According to the first aspect, in a first possible implementation of the video generation method, the migrating a dynamic facial feature of the person in the driving video to the target person image to obtain a target person dynamic video includes: separately performing key-point detection on the driving video and the target person image to obtain a dynamic facial key point of the person in the driving video and a static facial key point of the target person in the target person image; determining a first key-point mapping relationship between the driving video and the target person image based on the dynamic facial key point of the person in the driving video and the static facial key point of the target person in the target person image; and migrating the dynamic facial feature of the person in the driving video to the target person image based on the first key-point mapping relationship to obtain the target person dynamic video.

According to this embodiment of this application, the dynamic facial feature of the person in the driving video can be efficiently and accurately migrated to the target person image, so that a dynamic facial feature of the target person in the obtained target person dynamic video is the same as the dynamic facial feature of the person in the driving video. This is equivalent to generating a segment of target person dynamic video of the target person by using a static target person image of the target person.

According to the first possible implementation of the first aspect, the migrating the dynamic facial feature of the person in the driving video to the target person image based on the first key-point mapping relationship to obtain the target person dynamic video includes: converting the static facial key point of the target person in the target person image into a first target dynamic facial key point based on the first key-point mapping relationship, where a dynamic facial feature represented by the first target dynamic facial key point is the same as the dynamic facial feature of the person in the driving video; and generating the target person dynamic video based on the first target dynamic facial key point and the target person image.

According to this embodiment of this application, the static facial key point in the target person image is converted into the first target dynamic facial key point that is dynamic based on the first key-point mapping relationship, which is equivalent to generating the dynamic facial feature of the target person; and then the target person dynamic video is generated based on the first target dynamic facial key point and the target person image, which is equivalent to generating the target person dynamic video by combining the dynamic facial feature of the target person with the target person image. This can effectively make the dynamic facial feature of the target person in the generated target person dynamic video the same as the dynamic facial feature of the person in the driving video.

According to the first aspect, in a second possible implementation of the video generation method, the enhancing the dynamic facial feature in the lip synchronization video and image quality of the lip synchronization video based on the target person image to obtain a target person lip synchronization video includes: enhancing the dynamic facial feature in the lip synchronization video based on the target person image, to obtain a facial feature enhancement video with an enhanced dynamic facial feature; and migrating the dynamic facial feature in the facial feature enhancement video to the target person image to obtain a target person lip synchronization video with enhanced image quality.

According to this embodiment of this application, the dynamic facial feature in the lip synchronization video can be first enhanced, and then the enhanced dynamic facial feature can be migrated to the target person image, to obtain the target person lip synchronization video with higher image quality and a stronger dynamic facial feature. **In** other words, the image quality of the target person lip synchronization video is higher and lip synchronization effect of the target person lip synchronization video is more lifelike.

According to the second possible implementation of the first aspect, the migrating the dynamic facial feature in the facial feature enhancement video to the target person image to obtain a target person lip synchronization video with enhanced image quality includes: separately performing key-point detection on the facial feature enhancement video and the target person image to obtain a dynamic facial key point in the facial feature enhancement video and a static facial key point of the target person in the target person image; determining a second key-point mapping relationship between the facial feature enhancement video and the target person image based on the dynamic facial key point in the facial feature enhancement video and the static facial key point of the target person in the target person image; and migrating the dynamic facial feature in the facial feature enhancement video to the target person image based on the second key-point mapping relationship to obtain the target person lip synchronization video.

According to this embodiment of this application, the dynamic facial feature obtained through feature enhancement is migrated to the target person image, to obtain the target person lip synchronization video with higher image quality and a stronger dynamic facial feature. **In** other words, the image quality of the target person lip synchronization video is higher and lip synchronization effect of the target person lip synchronization video is more lifelike.

According to the second possible implementation of the first aspect, the migrating the dynamic facial feature in the facial feature enhancement video to the target person image based on the second key-point mapping relationship to obtain the target person lip synchronization video includes: converting the static facial key point of the target person in the target person image into a second target dynamic facial key point based on the second key-point mapping relationship, where a dynamic facial feature represented by the second target dynamic facial key point is the same as the dynamic facial feature in the facial feature enhancement video; and generating the target person lip synchronization video based on the second target dynamic facial key point and the target person image.

According to this embodiment of this application, the static facial key point in the target person image is converted into the second target dynamic facial key point that is dynamic based on the second key-point mapping relationship, which is equivalent to generating a dynamic facial feature of the target person; and then the target person lip synchronization video is generated based on the second target dynamic facial key point and the target person image, which is equivalent to generating the target person lip synchronization video by combining the dynamic facial feature of the target person with the target person image. This can effectively make a dynamic facial feature of the target person in the generated target person lip synchronization video the same as the enhanced dynamic facial feature in the facial feature enhancement video and synchronous with the target audio, so that the dynamic facial feature in the target person lip synchronization video is more lifelike.

According to the first aspect, in a third possible implementation of the video generation method, in the method, the target person lip synchronization video is generated based on the target person image, the target audio, and the driving video by using pre-trained models, and the pre-trained models include a person dynamic video generation model, a lip synchronization model, and a facial feature enhancement model; the migrating a dynamic facial feature of the person in the driving video to the target person image to obtain a target person dynamic video includes: migrating the dynamic facial feature of the person in the driving video to the target person image by using the person dynamic video generation model, to obtain the target person dynamic video; the generating a lip synchronization video based on the target audio and the target person dynamic video includes: generating the lip synchronization video based on the target audio and the target person dynamic video by using the lip synchronization model; and the enhancing the dynamic facial feature in the lip synchronization video and image quality of the lip synchronization video based on the target person image to obtain a target person lip synchronization video includes: enhancing, by using the facial feature enhancement model, the dynamic facial feature in the lip synchronization video based on the target person image to obtain the facial feature enhancement video with the enhanced dynamic facial feature, and migrating, by using the person dynamic video generation model, the dynamic facial feature in the facial feature enhancement video to the target person image to obtain the target person lip synchronization video with the enhanced image quality.

According to this embodiment of this application, a person image, audio, and a video can be separately decoupled from a model. **In** this way, a virtual dynamic figure of the target person can be generated without collecting a large quantity of customized sample videos of the target person to train a specific model to generate a virtual digital human video, and a migration generalization capability is high. Especially, by using dynamic facial feature enhancement and image quality enhancement processes, the target person lip synchronization video can be more lifelike and image quality can be higher, that is, definition and precision are higher.

According to a second aspect, an embodiment of this application provides a video generation apparatus. The apparatus includes: an obtaining module, configured to obtain a target person image of a target person, target audio that is set for the target person, and a preset driving video, where a face of a person in the driving video is dynamic; a migration module, configured to migrate a dynamic facial feature of the person in the driving video to the target person image to obtain a target person dynamic video, where a face of the target person in the target person dynamic video is dynamic, and the dynamic facial feature includes at least one of the following: an expression, a motion, and a lip shape; a synchronization module, configured to generate a lip synchronization video based on the target audio and the target person dynamic video, where a dynamic facial feature in the lip synchronization video is synchronous with the target audio; and an enhancement module, configured to enhance the dynamic facial feature in the lip synchronization video and image quality of the lip synchronization video based on the target person image to obtain a target person lip synchronization video.

According to the second aspect, in a first possible implementation of the video generation apparatus, the migrating a dynamic facial feature of the person in the driving video to the target person image to obtain a target person dynamic video includes: separately performing key-point detection on the driving video and the target person image to obtain a dynamic facial key point of the person in the driving video and a static facial key point of the target person in the target person image; determining a first key-point mapping relationship between the driving video and the target person image based on the dynamic facial key point of the person in the driving video and the static facial key point of the target person in the target person image; and migrating the dynamic facial feature of the person in the driving video to the target person image based on the first key-point mapping relationship to obtain the target person dynamic video.

According to the first possible implementation of the second aspect, the migrating the dynamic facial feature of the person in the driving video to the target person image based on the first key-point mapping relationship to obtain the target person dynamic video includes: converting the static facial key point of the target person in the target person image into a first target dynamic facial key point based on the first key-point mapping relationship, where a dynamic facial feature represented by the first target dynamic facial key point is the same as the dynamic facial feature of the person in the driving video; and generating the target person dynamic video based on the first target dynamic facial key point and the target person image.

According to the second aspect, in a second possible implementation of the video generation apparatus, the enhancing the dynamic facial feature in the lip synchronization video and image quality of the lip synchronization video based on the target person image to obtain a target person lip synchronization video includes: enhancing the dynamic facial feature in the lip synchronization video based on the target person image, to obtain a facial feature enhancement video with an enhanced dynamic facial feature; and migrating the dynamic facial feature in the facial feature enhancement video to the target person image to obtain a target person lip synchronization video with enhanced image quality.

According to the second possible implementation of the second aspect, the migrating the dynamic facial feature in the facial feature enhancement video to the target person image to obtain a target person lip synchronization video with enhanced image quality includes: separately performing key-point detection on the facial feature enhancement video and the target person image to obtain a dynamic facial key point in the facial feature enhancement video and a static facial key point of the target person in the target person image; determining a second key-point mapping relationship between the facial feature enhancement video and the target person image based on the dynamic facial key point in the facial feature enhancement video and the static facial key point of the target person in the target person image; and migrating the dynamic facial feature in the facial feature enhancement video to the target person image based on the second key-point mapping relationship to obtain the target person lip synchronization video.

According to the second possible implementation of the second aspect, the migrating the dynamic facial feature in the facial feature enhancement video to the target person image based on the second key-point mapping relationship to obtain the target person lip synchronization video includes: converting the static facial key point of the target person in the target person image into a second target dynamic facial key point based on the second key-point mapping relationship, where a dynamic facial feature represented by the second target dynamic facial key point is the same as the dynamic facial feature in the facial feature enhancement video; and generating the target person lip synchronization video based on the second target dynamic facial key point and the target person image.

According to the second aspect, in a third possible implementation of the video generation apparatus, for the apparatus, the target person lip synchronization video is generated based on the target person image, the target audio, and the driving video by using pre-trained models, and the pre-trained models include a person dynamic video generation model, a lip synchronization model, and a facial feature enhancement model; the migrating a dynamic facial feature of the person in the driving video to the target person image to obtain a target person dynamic video includes: migrating the dynamic facial feature of the person in the driving video to the target person image by using the person dynamic video generation model, to obtain the target person dynamic video; the generating a lip synchronization video based on the target audio and the target person dynamic video includes: generating the lip synchronization video based on the target audio and the target person dynamic video by using the lip synchronization model; and the enhancing the dynamic facial feature in the lip synchronization video and image quality of the lip synchronization video based on the target person image to obtain a target person lip synchronization video includes: enhancing, by using the facial feature enhancement model, the dynamic facial feature in the lip synchronization video based on the target person image to obtain the facial feature enhancement video with the enhanced dynamic facial feature, and migrating, by using the person dynamic video generation model, the dynamic facial feature in the facial feature enhancement video to the target person image to obtain the target person lip synchronization video with the enhanced image quality.

According to a third aspect, an embodiment of this application provides a video generation apparatus. The apparatus includes a processor; and a memory, configured to store instructions executable by the processor. When the processor is configured to execute the instructions, the video generation method in one or more of the first aspect or the plurality of possible implementations of the first aspect is implemented.

According to a fourth aspect, an embodiment of this application provides a non-volatile computer-readable storage medium. The computer-readable storage medium stores computer program instructions. When the computer program instructions are executed by a processor, the video generation method in one or more of the first aspect or the plurality of possible implementations of the first aspect is implemented.

According to a fifth aspect, an embodiment of this application provides a terminal device. The terminal device may perform the video generation method in one or more of the first aspect or the plurality of possible implementations of the first aspect.

According to a sixth aspect, an embodiment of this application provides a computer program product, including computer-readable code or a non-volatile computer-readable storage medium carrying computer-readable code. When the computer-readable code is run in an electronic device, a processor in the electronic device performs the video generation method in one or more of the first aspect or the plurality of possible implementations of the first aspect.

These aspects and other aspects of this application are more concise and comprehensible in descriptions of the following (plurality of) embodiments.

### BRIEF DESCRIPTION OF DRAWINGS

Together with this specification, accompanying drawings included in this specification as a part of this specification show example embodiments, features, and aspects of this application, and are used to describe principles of this application.
FIG. 1 is a diagram of an application scenario according to an embodiment of this application;
FIG. 2 is a flowchart of a video generation method according to an embodiment of this application;
FIG. 3 is a diagram of generating a target person dynamic video according to an embodiment of this application;
FIG. 4 is a diagram of generating a lip synchronization video according to an embodiment of this application;
FIG. 5 is a diagram of generating a facial feature enhancement video according to an embodiment of this application;
FIG. 6 is a diagram of generating a target person lip synchronization video according to an embodiment of this application;
FIG. 7 is a diagram of a video generation method according to an embodiment of this application;
FIG. 8 is a diagram of a video generation system according to an embodiment of this application;
FIG. 9 is a diagram of a structure of a video generation apparatus according to an embodiment of this application; and
FIG. 10 is a diagram of a structure of an electronic device 1300 according to an embodiment of this application.

### DESCRIPTION OF EMBODIMENTS

The following details various example embodiments, features, and aspects of this application with reference to accompanying drawings. Identical reference numerals in the accompanying drawings denote elements that have same or similar functions. Unless otherwise specified, the accompanying drawings are not necessarily drawn in scale although various aspects of embodiments are illustrated in the accompanying drawings.

The special term "example" herein means "used as an example, an embodiment, or an illustration". Any embodiment described as "example" herein is not necessarily construed as superior to or better than other embodiments.

In addition, for better description of this application, many specific details are given in the following specific implementations. A person skilled in the art should understand that this application can also be implemented without some specific details. In some examples, methods, means, elements, and circuits that are well-known to a person skilled in the art are not detailed, so that the subject matter of this application is highlighted.

For better understanding of solutions in embodiments of this application, the following first describes related terms and concepts that may be used in embodiments of this application.

As described above, with development of artificial intelligence technologies, a virtual digital human technology used to simulate appearances, words, and behaviors of real humans is a prerequisite for implementing a concept of "metaverse". Because quality of the virtual digital human technology depends on user experience, a high human-like degree and high visualization precision are basic requirements of the virtual digital human technology.

**In** a related technology, an AudioDVP model may be used to generate a virtual digital human video. The AudioDVP model is a dedicated virtual human generation model for synthesizing, into a target person video, a person image video that is input by a free sound driver. To obtain a trustworthy and lifelike facial expression through conversion from input audio, this manner uses a parameterized three-dimensional facial model represented by a geometric shape, a facial expression, illumination, and the like. **In** this manner, a face in an original video is parameterized, a mapping from an audio feature to a model parameter is learned; input source audio is represented as a high-dimensional feature to predict a facial expression parameter of the three-dimensional facial model; then an expression parameter calculated based on the original video is replaced with the expression parameter predicted based on the audio, and the face is re-deduced; and finally, a lifelike person image video is generated from a re-deduced synthetic face sequence by using a neural face renderer. However, for the model, a large amount of training data needs to be shot, a time period is long, shooting costs are high, and requirements on a sitting posture, an expression, a motion, and a background are strict. **In** addition, due to limited training data, a generalization capability of the model is poor, and lip synchronization effect of the generated person image video is undesirable.

Alternatively, a Wav2Lip model may be used. The Wav2Lip model is a lip synchronization virtual human generation model based on supervised learning. For this type of general virtual human generation model, audio and a video can be combined by using only a segment of person video and a segment of target voice, and a person's lip better matches the audio. In this model, an additional lip synchronization discriminator (for example, a LipGAN model) is mainly added to determine whether a lip is synchronous with audio. In this way, the lip synchronization discriminator added with context information detection can learn a capability of converting any audio into a corresponding lip, to implement synchronization between the any audio and the lip. However, the model is mainly generated for a lip region, a lip and a whole body have a discordant feeling, and image quality of a generated video is low with a maximum pixel resolution of only 128 × 128. Consequently, practical value is not high.

In view of this, this application provides a video generation method. In the video generation method in embodiments of this application, a single target person image can be driven by using any audio and any video, and a target person lip synchronization video of a target person can be generated. This is equivalent to generating a virtual digital human video of the target person, and enables a person image, audio, and a video to be decoupled from a model. In this way, a virtual dynamic figure of the target person can be generated without collecting a large quantity of customized video datasets to train a model, and a migration generalization capability is high. In addition, by using a dynamic facial feature enhancement process, the virtual dynamic figure in the target person lip synchronization video is more lifelike and image quality is higher, that is, definition and precision are higher.

The video generation method in embodiments of this application is applicable to a video generation scenario in which a virtual digital human video with a high human-like degree and high image quality is generated for a user, and can be applied to a virtual digital human tool platform, so that the user conveniently uses the tool platform to generate a virtual figure of the user or performs secondary development based on the platform.

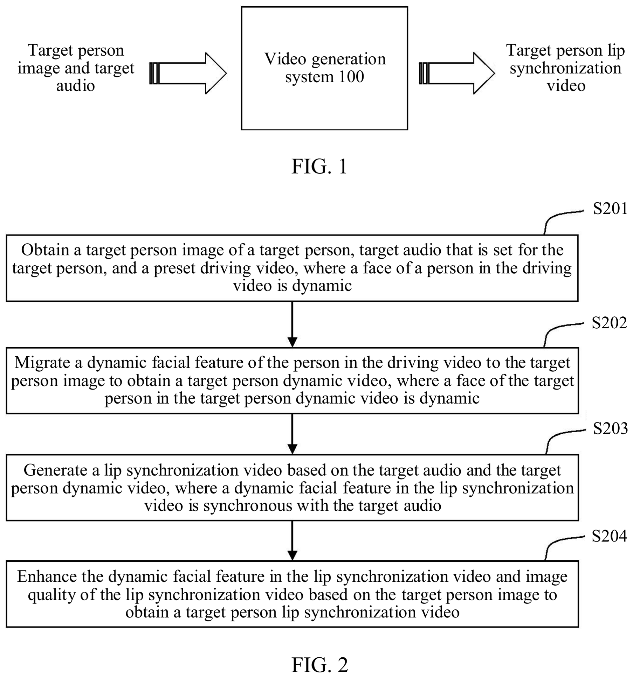

FIG. 1 shows an application scenario of a video generation method. In this scenario, a video generation system 100 may be directly deployed on a terminal device or a server, or may be used in a virtual digital human tool platform that has been deployed on a terminal device or a server. When a user expects to generate a virtual digital human video of the user, the user may input a target person image and a segment of target audio into the video generation system 100. The target person image may be a real image of the user, and the target audio may be audio including specific content that the user expects a person in the virtual digital human video to speak. The video generation system 100 may output a target person lip synchronization video with high lip synchronization and high image quality based on the target person image and the target audio by using a built-in driving video, where facial features such as a dynamic expression and a lip shape of a target person in the target person lip synchronization video are synchronous with the target audio. The user may directly use the target person lip synchronization video as the virtual digital human video needed by the user; or may perform secondary development on the target person lip synchronization video, for example, adjust a background, a filter, and a style, and use a video obtained through the secondary development as the virtual digital human video needed by the user. This is not limited in embodiments of this application.

The video generation method in this application can be applied to various terminal devices through software or hardware adaptation. The terminal device in this application may be a device with a wireless connection function. The wireless connection function refers to making a connection with other terminal devices in a wireless connection manner like Wi-Fi or Bluetooth. The terminal device in this application may also have a function of communication through a wired connection. The terminal device in this application may be a touchscreen device, may be a non-touchscreen device, or may have no screen. The touchscreen terminal device may be controlled by performing tapping, sliding, or the like on a display screen by using a finger, a stylus, or the like. The non-touchscreen device may be connected to an input device like a mouse, a keyboard, or a touch panel, and the terminal device is controlled by using the input device. The device that has no screen may be, for example, a Bluetooth speaker without a screen. For example, the user may input the target person image and the target audio into the video generation system 100 by touching a corresponding control on the terminal device, so that the video generation system 100 deployed on the terminal device may output the target person lip synchronization video, and present the target person lip synchronization video to the user on the terminal device.

For example, the terminal device in this application may be a smartphone, a netbook, a tablet computer, a notebook computer, a wearable electronic device (for example, a smart band or a smartwatch), a TV, a virtual reality device, a sound system, an electronic ink, or the like.

Alternatively, the video generation method in this embodiment of this application can be applied to a server. The server may be located on a cloud or locally, may be a physical device or may be a virtual device like a virtual machine or a container, and has a wireless communication function. The wireless communication function may be configured on a chip (system) or another component or part of the server. The server may be a device with a wireless connection function. The wireless connection function refers to making a connection with other servers or terminal devices in a wireless connection manner like Wi-Fi or Bluetooth. The server in this application may also have a function of communication through a wired connection. For example, the server in this application may be located on a cloud, and communicates with the terminal device, to receive the target person image and the target audio that are sent by the terminal device, generate the target person lip synchronization video by using the video generation system 100 deployed on the server, and return the target person lip synchronization video to the terminal device.

The following details, by using FIG. 2 to FIG. 7, the video generation method provided in embodiments of this application.

FIG. 2 is a flowchart of a video generation method according to an embodiment of this application. The method can be applied to the foregoing video generation system 100, and the method may be performed by the foregoing terminal device or server. As shown in FIG. 2, the method includes the following steps.

Step S201: Obtain a target person image of a target person, target audio that is set for the target person, and a preset driving video, where a face of a person in the driving video is dynamic.

The target person is a real human, and the target person image may be a high-definition face image or a high-definition whole body image that is of the target person and that is shot by using an image shooting apparatus (for example, a camera), or may be a high-definition face image or a high-definition whole body image that is of the target person and that is downloaded by a user from a network to the terminal device or uploaded by the user from the terminal device to the server. It should be understood that both image content in the target person image and a manner of obtaining the target person image are not limited in embodiments of this application. Optionally, preprocessing such as adaptive cropping and resizing may be further performed on the target person image provided by the user, to meet a requirement of a subsequent processing step on image data.

The target audio may be audio of any person recorded by using an audio recording apparatus, may be audio of the target person, or may be any audio downloaded by the user from a network to the terminal device or uploaded by the user from the terminal device to the server. The target audio may be used as a driving audio, where features such as a motion, an expression, a sitting posture, and clothes of any person do not need to be considered. It should be understood that both audio content in the target audio and a manner of obtaining the target audio are not limited in embodiments of this application.

The driving video may be a high-quality video of any person recorded by using a video recording apparatus in advance. In the driving video, an expression, a motion, a sitting posture, clothes, and the like of the person may be specific, but the face of the person needs to be dynamic, so that a face of the target person in a target person dynamic video generated by using the driving video is also dynamic. It should be understood that both video content in the driving video and a manner of obtaining the driving video are not limited in embodiments of this application.

Step S202: Migrate a dynamic facial feature of the person in the driving video to the target person image to obtain the target person dynamic video, where the face of the target person in the target person dynamic video is dynamic, and the dynamic facial feature includes at least one of the following: an expression, a motion, and a lip shape.

It should be understood that, when a person is speaking, an expression, a motion, and a lip shape of a face of the person may dynamically change. Dynamic facial features can be understood as facial features that are dynamic: features such as a dynamic expression, a motion (for example, shaking left and right), and a dynamic lip shape (for example, a shape of a lip when the person is speaking).

**In** a possible implementation, the migrating a dynamic facial feature of the person in the driving video to the target person image to obtain the target person dynamic video includes: separately performing key-point detection on the driving video and the target person image to obtain a dynamic facial key point of the person in the driving video and a static facial key point of the target person in the target person image; determining a first key-point mapping relationship between the driving video and the target person image based on the dynamic facial key point of the person in the driving video and the static facial key point of the target person in the target person image; and migrating the dynamic facial feature of the person in the driving video to the target person image based on the first key-point mapping relationship to obtain the target person dynamic video. In this manner, the dynamic facial feature of the person in the driving video can be efficiently and accurately migrated to the target person image, so that a dynamic facial feature of the target person in the obtained target person dynamic video is the same as the dynamic facial feature of the person in the driving video. This is equivalent to generating a segment of target person dynamic video of the target person by using a static target person image of the target person.

Key-point detection may be separately performed on the driving video and the target person image by using a key-point detection technology known in the art, to obtain the dynamic facial key point of the person in the driving video and the static facial key point of the target person in the target person image. This is not limited in embodiments of this application. It should be understood that, after the dynamic facial key point of the person in the driving video and the static facial key point of the target person in the target person image are obtained, the dynamic facial key point may be matched with the static facial key point, to obtain a static facial key point and a dynamic facial key point that are paired and that belong to a same part of a body (for example, both are key points at a left corner of a mouth); the first key-point mapping relationship between the driving video and the target person image may be determined based on the static facial key point and the dynamic facial key point that are paired; and then the dynamic facial feature of the person in the driving video is migrated to the target person image based on the first key-point mapping relationship to obtain the target person dynamic video. This is equivalent to converting, based on the first key-point mapping relationship, the target person image into the target person dynamic video in which the dynamic facial feature is consistent with that in the driving video.

Optionally, the migrating the dynamic facial feature of the person in the driving video to the target person image based on the first key-point mapping relationship to obtain the target person dynamic video includes: converting the static facial key point of the target person in the target person image into a first target dynamic facial key point based on the first key-point mapping relationship, where a dynamic facial feature represented by the first target dynamic facial key point is the same as the dynamic facial feature of the person in the driving video; and generating the target person dynamic video based on the first target dynamic facial key point and the target person image. The static facial key point in the target person image is converted into the first target dynamic facial key point that is dynamic based on the first key-point mapping relationship, which is equivalent to generating the dynamic facial feature of the target person; and then the target person dynamic video is generated based on the first target dynamic facial key point and the target person image, which is equivalent to generating the target person dynamic video by combining the dynamic facial feature of the target person with the target person image. This manner can effectively make the dynamic facial feature of the target person in the generated target person dynamic video the same as the dynamic facial feature of the person in the driving video.

In actual application, a pre-trained person dynamic video generation model (for example, a motion capture and video generation model) may be used to migrate the dynamic facial feature of the person in the driving video to the target person image to obtain the target person dynamic video. Specifically, the person dynamic video generation model may separately perform key-point detection on the driving video and the target person image to obtain the dynamic facial key point of the person in the driving video and the static facial key point of the target person in the target person image; determine the first key-point mapping relationship between the driving video and the target person image; and migrate dynamic facial features such as an expression, a motion, and a lip shape of the person in the driving video to the target person image based on the first mapping relationship to obtain the target person dynamic video. Optionally, in the person dynamic video generation model, for example, an image region (for example, a background region) of non-interest in the target person image may be shielded by using an occlusion mask, so that a person region is mainly retained in the target person dynamic video.

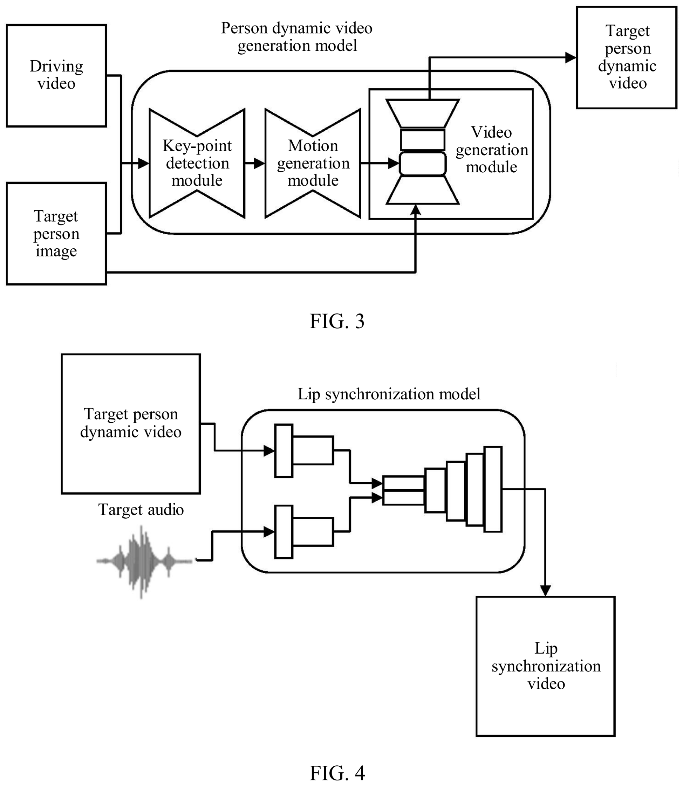

FIG. 3 is a diagram of generating a target person dynamic video according to an embodiment of this application. As shown in FIG. 3, a driving video and a target person image are input into a person dynamic video generation model, and a target person dynamic video is output. The person dynamic video generation model includes a key-point detection module, a motion generation module, and a video generation module. The key-point detection module 1s configured to separately perform key-point detection on the driving video and the target person image to obtain a dynamic facial key point of a person in the driving video and a static facial key point of a target person in the target person image; and determine a first key-point mapping relationship between the driving video and the target person image based on the dynamic facial key point and the static facial key point. The motion generation module 1s configured to convert the static facial key point of the target person in the target person image into a first target dynamic facial key point based on the first key-point mapping relationship. The video generation module 1s configured to generate the target person dynamic video based on the first target dynamic facial key point and the target person image.

It should be understood that the person dynamic video generation model may be a deep learning model, a machine learning model, or the like known in the art. Certainly, alternatively, a person skilled in the art may independently develop a person dynamic video generation model, and a person skilled in the art may train the person dynamic video generation model in a model training manner known in the art. A type, a structure, a training manner, and the like of the person dynamic video generation model are not limited in embodiments of this application.

Step S203: Generate a lip synchronization video based on the target audio and the target person dynamic video, where a dynamic facial feature in the lip synchronization video is synchronous with the target audio.

In actual application, a pre-trained lip synchronization model may be used to generate the lip synchronization video based on the target audio and the target person dynamic video. FIG. 4 is a diagram of generating a lip synchronization video according to an embodiment of this application. As shown in FIG. 4, target audio and a target person dynamic video are input into a lip synchronization model, and a lip synchronization video is output.

The lip synchronization model may be any audio-driven face generation model with high lip synchronization known in the art. In actual application, the lip synchronization video generated by using the lip synchronization model may have low definition. In other words, it is unnecessary to generate a high-definition lip synchronization video, and only high lip synchronization effect of the lip synchronization video needs to be ensured. That a dynamic facial feature in the lip synchronization video is synchronous with the target audio can be understood as follows: Dynamic facial features such as an expression, a motion, and a lip shape of a target person in the lip synchronization video match the target audio.

It should be understood that the lip synchronization model may be a deep learning model, a machine learning model, or the like known in the art. Certainly, alternatively, a person skilled in the art may independently develop a lip synchronization model, and a person skilled in the art may train the lip synchronization model in a model training manner known in the art. A type, a structure, and a training manner of the lip synchronization model are not limited in embodiments of this application.

Step S204: Enhance the dynamic facial feature in the lip synchronization video and image quality of the lip synchronization video based on the target person image to obtain a target person lip synchronization video.

The enhancing the dynamic facial feature in the lip synchronization video can be understood as enhancing the dynamic facial features such as the dynamic expression, the motion, and the lip shape of the target person in the lip synchronization video, so that lip synchronization effect of key facial features in the lip synchronization video can be more lifelike. As described above, the lip synchronization video may be a low-definition video. Therefore, enhancing the image quality of the lip synchronization video is equivalent to enhancing the definition of the lip synchronization video, so that the target person lip synchronization video has higher definition.

In a possible implementation, the enhancing the dynamic facial feature in the lip synchronization video and image quality of the lip synchronization video based on the target person image to obtain a target person lip synchronization video includes: enhancing the dynamic facial feature in the lip synchronization video based on the target person image, to obtain a facial feature enhancement video with an enhanced dynamic facial feature; and migrating the dynamic facial feature in the facial feature enhancement video to the target person image to obtain a target person lip synchronization video with enhanced image quality. This manner can be understood as follows: The dynamic facial feature in the lip synchronization video is first enhanced, and then the enhanced dynamic facial feature is migrated to the target person image, to obtain the target person lip synchronization video with higher image quality and a stronger dynamic facial feature. In other words, the image quality of the target person lip synchronization video is higher and lip synchronization effect of the target person lip synchronization video is more lifelike.

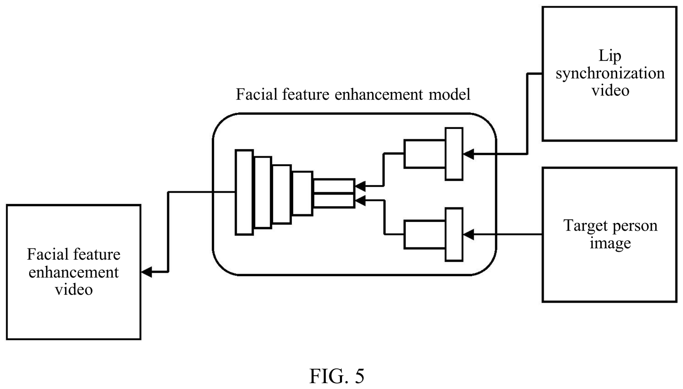

In actual application, a pre-trained facial feature enhancement model may be used to enhance the dynamic facial feature in the lip synchronization video based on the target person image, to obtain the facial feature enhancement video with the enhanced dynamic facial feature. FIG. 5 is a diagram of generating a facial feature enhancement video according to an embodiment of this application. As shown in FIG. 5, a target person image and a lip synchronization video are input into a facial feature enhancement model, and a facial feature enhancement video is output.

The facial feature enhancement model may be any model that is known in the art and that can perform feature enhancement on an image by using an original high-definition image feature for reference, provided that the dynamic facial feature in the lip synchronization video can be enhanced based on the target person image. It should be understood that the facial feature enhancement model may be a deep learning model, a machine learning model, or the like known in the art. Certainly, alternatively, a person skilled in the art may independently develop a facial feature enhancement model, and a person skilled in the art may train the facial feature enhancement model in a model training manner known in the art. A type, a structure, and a training manner of the facial feature enhancement model are not limited in embodiments of this application.

In a possible implementation, the migrating the dynamic facial feature in the facial feature enhancement video to the target person image to obtain a target person lip synchronization video with enhanced image quality includes: separately performing key-point detection on the facial feature enhancement video and the target person image to obtain a dynamic facial key point in the facial feature enhancement video and a static facial key point of the target person in the target person image; determining a second key-point mapping relationship between the facial feature enhancement video and the target person image based on the dynamic facial key point in the facial feature enhancement video and the static facial key point of the target person in the target person image; and migrating the dynamic facial feature in the facial feature enhancement video to the target person image based on the second key-point mapping relationship to obtain the target person lip synchronization video. In this manner, the dynamic facial feature obtained through feature enhancement is migrated to the target person image, to obtain the target person lip synchronization video with higher image quality and a stronger dynamic facial feature. In other words, the image quality of the target person lip synchronization video is higher and lip synchronization effect of the target person lip synchronization video is more lifelike.

Key-point detection may be separately performed on the facial feature enhancement video and the target person image by using a key-point detection technology known in the art, to obtain the dynamic facial key point in the facial feature enhancement video and the static facial key point of the target person in the target person image. This is not limited in embodiments of this application. It should be understood that, after the dynamic facial key point of a person in the facial feature enhancement video and the static facial key point of the target person in the target person image are obtained, the dynamic facial key point may be matched with the static facial key point, to obtain a static facial key point and a dynamic facial key point that are paired and that belong to a same part of a body (for example, both are key points at a left corner of a mouth); the second key-point mapping relationship between the facial feature enhancement video and the target person image may be determined based on the static facial key point and the dynamic facial key point that are paired; and then the dynamic facial feature of the person in the driving video is migrated to the target person image based on the second key-point mapping relationship to obtain the target person dynamic video. This is equivalent to converting, based on the second key-point mapping relationship, the target person image into the target person lip synchronization video in which the dynamic facial feature is consistent with that in the facial feature enhancement video. Because the dynamic facial feature in the facial feature enhancement video is synchronous with the target audio, the dynamic facial feature in the target task lip synchronization video obtained by using the dynamic facial feature in the facial feature enhancement video is also synchronous with the target audio.

Optionally, the migrating the dynamic facial feature in the facial feature enhancement video to the target person image based on the second key-point mapping relationship to obtain the target person lip synchronization video includes: converting the static facial key point of the target person in the target person image into a second target dynamic facial key point based on the second key-point mapping relationship, where a dynamic facial feature represented by the second target dynamic facial key point is the same as the dynamic facial feature in the facial feature enhancement video; and generating the target person lip synchronization video based on the second target dynamic facial key point and the target person image. The static facial key point in the target person image is converted into the second target dynamic facial key point that is dynamic based on the second key-point mapping relationship, which is equivalent to generating a dynamic facial feature of the target person; and then the target person lip synchronization video is generated based on the second target dynamic facial key point and the target person image, which is equivalent to generating the target person lip synchronization video by combining the dynamic facial feature of the target person with the target person image. This manner can effectively make a dynamic facial feature of the target person in the generated target person lip synchronization video the same as the enhanced dynamic facial feature in the facial feature enhancement video and synchronous with the target audio, so that the dynamic facial feature in the target person lip synchronization video is more lifelike.

As described above, the pre-trained person dynamic video generation model (for example, the motion capture and video generation model) may be used to migrate the dynamic facial feature of the person in the driving video to the target person image to obtain the target person dynamic video. In this case, the person dynamic video generation model may continue to be used to migrate the dynamic facial feature in the facial feature enhancement video to the target person image to obtain the target person lip synchronization video with the enhanced image quality. Specifically, the person dynamic video generation model may separately perform key-point detection on the facial feature enhancement video and the target person image to obtain the dynamic facial key point of the person in the facial feature enhancement video and the static facial key point of the target person in the target person image; determine the second key-point mapping relationship between the facial feature enhancement video and the target person image; and migrate dynamic facial features such as an expression, a motion, and a lip shape of the person in the facial feature enhancement video to the target person image based on the second mapping relationship to obtain the target person lip synchronization video. Optionally, in the person dynamic video generation model, for example, an image region (for example, a background region) of non-interest in the target person image may be shielded by using an occlusion mask, so that a person region is mainly retained in the target person lip synchronization video.

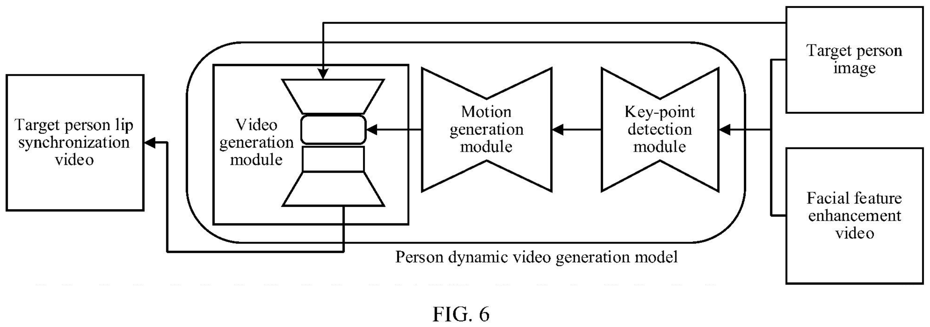

FIG. 6 is a diagram of generating a target person lip synchronization video according to an embodiment of this application. As shown in FIG. 6, a facial feature enhancement video and a target person image are input into a person dynamic video generation model, and a target person lip synchronization video is output. The person dynamic video generation model includes a key-point detection module, a motion generation module, and a video generation module. The key-point detection module 1s configured to separately perform key-point detection on the facial feature enhancement video and the target person image to obtain a dynamic facial key point in the facial feature enhancement video and a static facial key point of a target person in the target person image; and determine a second key-point mapping relationship between the facial feature enhancement video and the target person image based on the dynamic facial key point and the static facial key point. The motion generation module 1s configured to convert the static facial key point of the target person in the target person image into a second target dynamic facial key point based on the second key-point mapping relationship. The video generation module 1s configured to generate the target person dynamic video based on the second target dynamic facial key point and the target person image.

As described above, the person dynamic video generation model may be a deep learning model, a machine learning model, or the like known in the art. Certainly, alternatively, a person skilled in the art may independently develop a person dynamic video generation model, and a person skilled in the art may train the person dynamic video generation model in a model training manner known in the art. A type, a structure, a training manner, and the like of the person dynamic video generation model are not limited in embodiments of this application.

According to this embodiment of this application, a single target person image can be driven by using any audio and any video, and a target person lip synchronization video of a target person can be generated. To be specific, dynamic facial feature migration, lip synchronization, feature enhancement, and image quality enhancement are sequentially performed by using the single target person image of the target person, the target audio, and the driving video, to generate the target person lip synchronization video with high image quality and high lip synchronization. This is equivalent to generating a virtual digital human video of the target person, and enables a person image, audio, and a video to be decoupled from a model. **In** this way, a virtual dynamic figure of the target person can be generated without collecting a large quantity of customized sample videos of the target person to train a specific model to generate the virtual digital human video, and a migration generalization capability is high. Especially, by using dynamic facial feature enhancement and image quality enhancement processes, the virtual dynamic figure in the target person lip synchronization video can be more lifelike and image quality can be higher, that is, definition and precision are higher.

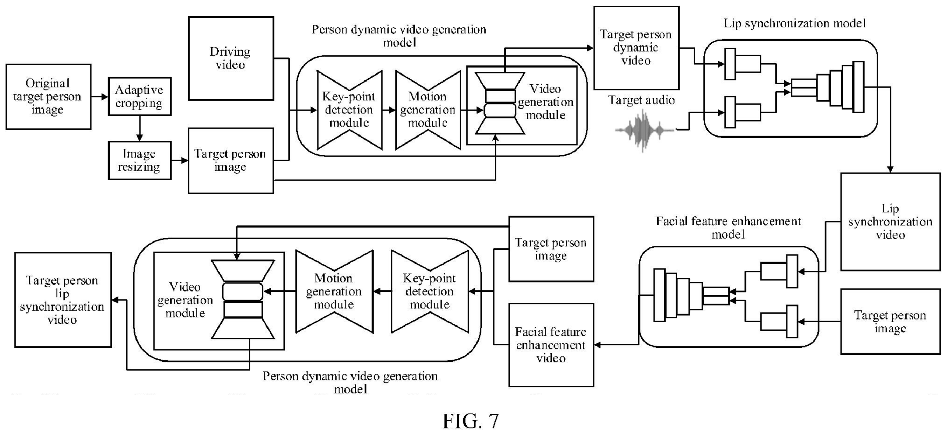

Based on the processing processes shown in FIG. 3 to FIG. 6, an embodiment of this application further provides a video generation method shown in FIG. 7. As shown in FIG. 7, in the video generation method, a target person lip synchronization video is generated based on a target person image, target audio, and a driving video by using pre-trained models. The pre-trained models include a person dynamic video generation model, a lip synchronization model, and a facial feature enhancement model.

**In** the video generation method, a dynamic facial feature of a person in a driving video is migrated to a target person image by using the person dynamic video generation model, to obtain a target person dynamic video; a lip synchronization video is generated based on the target audio and the target person dynamic video by using the lip synchronization model; a dynamic facial feature in the lip synchronization video is enhanced based on the target person image by using the facial feature enhancement model, to obtain a facial feature enhancement video with an enhanced dynamic facial feature; and the dynamic facial feature in the facial feature enhancement video is migrated to the target person image by using the person dynamic video generation model, to obtain a target person lip synchronization video with enhanced image quality.

Specifically, the video generation method shown in FIG. 7 includes: performing adaptive cropping (crop) and image resizing (resize) on an original target person image to obtain the target person image; inputting the driving video and the target person image into the person dynamic video generation model, and outputting the target person dynamic video; inputting the target audio and the target person dynamic video into the lip synchronization model, and outputting the lip synchronization video; inputting the target person image and the lip synchronization video into the facial feature enhancement model, and outputting the facial feature enhancement video; and inputting the facial feature enhancement video and the target person image into the person dynamic video generation model, and outputting the target person lip synchronization video. It should be understood that, for implementation of the models in FIG. 7, refer to the specific implementations shown in FIG. 3 to FIG. 6. Details are not described herein again.

According to this embodiment of this application, a person image, audio, and a video can be separately decoupled from a model. In this way, a virtual dynamic figure of the target person can be generated without collecting a large quantity of customized sample videos of the target person to train a specific model to generate a virtual digital human video, and a migration generalization capability is high. Especially, by using dynamic facial feature enhancement and image quality enhancement processes, the virtual dynamic figure in the target person lip synchronization video can be more lifelike and image quality can be higher, that is, definition and precision are higher.

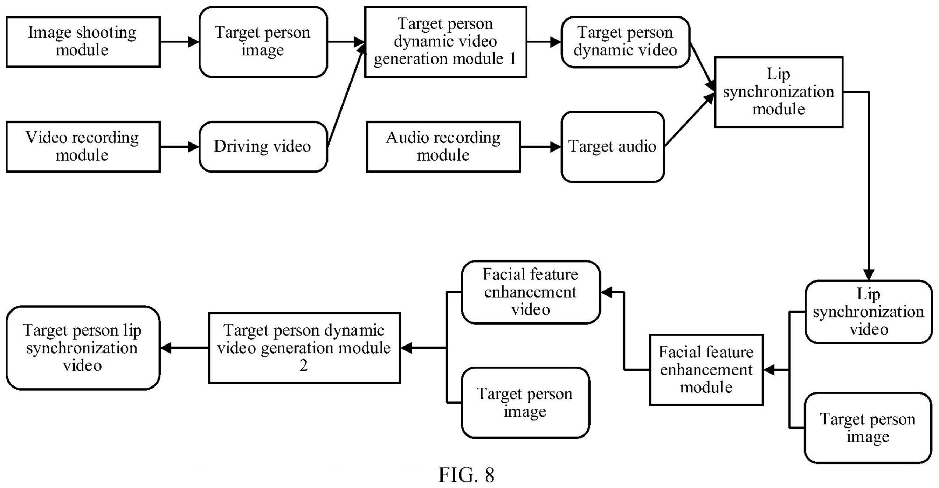

FIG. 8 is a diagram of a video generation system according to an embodiment of this application. As shown in FIG. 8, the video generation system includes:
an image shooting module, configured to shoot a single high-quality target person image of a target person;
a video recording module, configured to record a small quantity of high-quality videos of any person as built-in driving videos of a target person dynamic video generation module;
an audio recording module, configured to record target audio of any person as driving audio, where a motion, an expression, a sitting posture, and clothes do not need to be considered;
a target person dynamic video generation module 1, configured to generate a target person dynamic video based on the input target person image and the built-in driving videos;
a lip synchronization module, configured to generate a low-definition lip synchronization video based on the target audio and the target person dynamic video;
a facial feature enhancement module, configured to generate a facial feature enhancement video with an enhanced dynamic facial feature based on the low-definition lip synchronization video and the target person image of the target person; and
a target person dynamic video generation module 2, configured to generate a target person lip synchronization video based on the input target person image and the facial feature enhancement video with the enhanced facial feature.

The image shooting module, the video recording module, the audio recording module, the target person dynamic video generation module 1, and the lip synchronization module jointly implement generation of the lip synchronization video in which a person is decoupled from a model. The facial feature enhancement module and the target person dynamic video generation module 2 jointly implement generation of the high-definition target person lip synchronization video with the enhanced dynamic facial feature and enhanced image quality, that is, generation of a virtual digital human video of the target person. It should be understood that, for functions of the modules in the video generation system, refer to the specific implementations shown in FIG. 2 to FIG. 6. Details are not described herein again.

According to this embodiment of this application, the target person lip synchronization video of the target person can be efficiently generated, that is, a virtual dynamic figure of the target person is generated, and a migration generalization capability is high. Especially, by using dynamic facial feature enhancement and image quality enhancement processes, the target person lip synchronization video can be more lifelike and image quality can be higher, that is, definition and precision are higher.

According to the foregoing video generation method and system in embodiments of this application, the target person dynamic video of the target person can be generated only by inputting the single person image of the target person, and then the target person dynamic video is driven with reference to the target audio input to generate, based on the target audio, the lip synchronization video in which an expression and a lip shape are synchronous with the target audio. A video may be decoupled from a model to improve a generalization capability of the model for generating lip synchronization videos of different target persons. For the generated lip synchronization video, a model based on dynamic facial feature enhancement is constructed to perform feature enhancement and image quality enhancement on the lip synchronization video. This improves the definition of the lip synchronization video, and additionally enhances a most critical dynamic facial feature. In this way, the dynamic facial feature of the target person in the target person lip synchronization model has higher definition, and is easy to recognize and more lifelike.

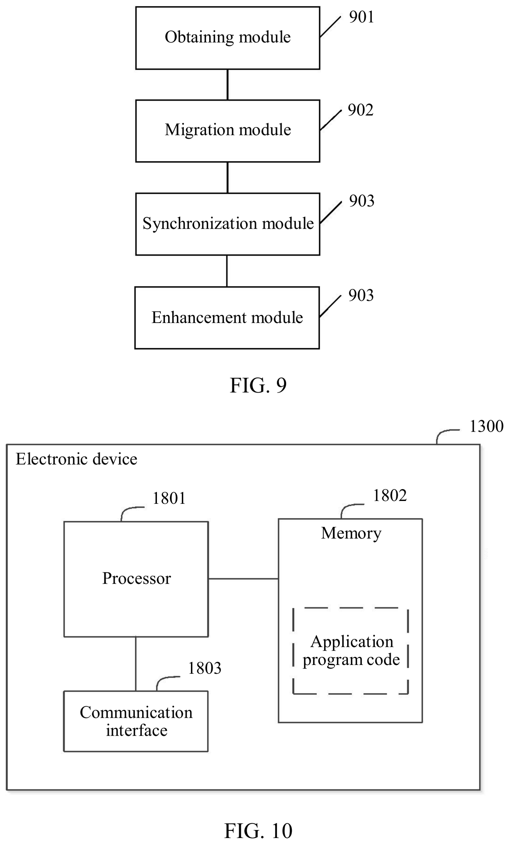

FIG. 9 is a diagram of a structure of a video generation apparatus according to an embodiment of this application. The apparatus may be used in the foregoing video generation system 100. As shown in FIG. 9, the apparatus includes:
an obtaining module 901, configured to obtain a target person image of a target person, target audio that is set for the target person, and a preset driving video, where a face of a person in the driving video is dynamic;
a migration module 902, configured to migrate a dynamic facial feature of the person in the driving video to the target person image to obtain a target person dynamic video, where a face of the target person in the target person dynamic video is dynamic, and the dynamic facial feature includes at least one of the following: an expression, a motion, and a lip shape;
a synchronization module 903, configured to generate a lip synchronization video based on the target audio and the target person dynamic video, where a dynamic facial feature in the lip synchronization video is synchronous with the target audio; and
an enhancement module 904, configured to enhance the dynamic facial feature in the lip synchronization video and image quality of the lip synchronization video based on the target person image to obtain a target person lip synchronization video.

According to this embodiment of this application, a single target person image can be driven by using any audio and any video, and a target person lip synchronization video of a target person can be generated. To be specific, dynamic facial feature migration, lip synchronization, feature enhancement, and image quality enhancement are sequentially performed by using the single target person image of the target person, the target audio, and the driving video, to generate the target person lip synchronization video with high image quality and high lip synchronization. This is equivalent to generating a virtual digital human video of the target person, and enables a person image, audio, and a video to be decoupled from a model. **In** this way, a virtual dynamic figure of the target person can be generated without collecting a large quantity of customized sample videos of the target person to train a specific model to generate the virtual digital human video, and a migration generalization capability is high. Especially, by using dynamic facial feature enhancement and image quality enhancement processes, the virtual dynamic figure in the target person lip synchronization video can be more lifelike and image quality can be higher, that is, definition and precision are higher.

**In** a possible implementation, the migrating a dynamic facial feature of the person in the driving video to the target person image to obtain a target person dynamic video includes: separately performing key-point detection on the driving video and the target person image to obtain a dynamic facial key point of the person in the driving video and a static facial key point of the target person in the target person image; determining a first key-point mapping relationship between the driving video and the target person image based on the dynamic facial key point of the person in the driving video and the static facial key point of the target person in the target person image; and migrating the dynamic facial feature of the person in the driving video to the target person image based on the first key-point mapping relationship to obtain the target person dynamic video.

According to this embodiment of this application, the dynamic facial feature of the person in the driving video can be efficiently and accurately migrated to the target person image, so that a dynamic facial feature of the target person in the obtained target person dynamic video is the same as the dynamic facial feature of the person in the driving video. This is equivalent to generating a segment of target person dynamic video of the target person by using a static target person image of the target person.

**In** a possible implementation, the migrating the dynamic facial feature of the person in the driving video to the target person image based on the first key-point mapping relationship to obtain the target person dynamic video includes: converting the static facial key point of the target person in the target person image into a first target dynamic facial key point based on the first key-point mapping relationship, where a dynamic facial feature represented by the first target dynamic facial key point is the same as the dynamic facial feature of the person in the driving video; and generating the target person dynamic video based on the first target dynamic facial key point and the target person image.

According to this embodiment of this application, the static facial key point in the target person image is converted into the first target dynamic facial key point that is dynamic based on the first key-point mapping relationship, which is equivalent to generating the dynamic facial feature of the target person; and then the target person dynamic video is generated based on the first target dynamic facial key point and the target person image, which is equivalent to generating the target person dynamic video by combining the dynamic facial feature of the target person with the target person image. This can effectively make the dynamic facial feature of the target person in the generated target person dynamic video the same as the dynamic facial feature of the person in the driving video.

**In** a possible implementation, the enhancing the dynamic facial feature in the lip synchronization video and image quality of the lip synchronization video based on the target person image to obtain a target person lip synchronization video includes: enhancing the dynamic facial feature in the lip synchronization video based on the target person image, to obtain a facial feature enhancement video with an enhanced dynamic facial feature; and migrating the dynamic facial feature in the facial feature enhancement video to the target person image to obtain a target person lip synchronization video with enhanced image quality.

According to this embodiment of this application, the dynamic facial feature in the lip synchronization video can be first enhanced, and then the enhanced dynamic facial feature can be migrated to the target person image, to obtain the target person lip synchronization video with higher image quality and a stronger dynamic facial feature. **In** other words, the image quality of the target person lip synchronization video is higher and lip synchronization effect of the target person lip synchronization video is more lifelike.

**In** a possible implementation, the migrating the dynamic facial feature in the facial feature enhancement video to the target person image to obtain a target person lip synchronization video with enhanced image quality includes: separately performing key-point detection on the facial feature enhancement video and the target person image to obtain a dynamic facial key point in the facial feature enhancement video and a static facial key point of the target person in the target person image; determining a second key-point mapping relationship between the facial feature enhancement video and the target person image based on the dynamic facial key point in the facial feature enhancement video and the static facial key point of the target person in the target person image; and migrating the dynamic facial feature in the facial feature enhancement video to the target person image based on the second key-point mapping relationship to obtain the target person lip synchronization video.

According to this embodiment of this application, the dynamic facial feature obtained through feature enhancement is migrated to the target person image, to obtain the target person lip synchronization video with higher image quality and a stronger dynamic facial feature. **In** other words, the image quality of the target person lip synchronization video is higher and lip synchronization effect of the target person lip synchronization video is more lifelike.

**In** a possible implementation, the migrating the dynamic facial feature in the facial feature enhancement video to the target person image based on the second key-point mapping relationship to obtain the target person lip synchronization video includes: converting the static facial key point of the target person in the target person image into a second target dynamic facial key point based on the second key-point mapping relationship, where a dynamic facial feature represented by the second target dynamic facial key point is the same as the dynamic facial feature in the facial feature enhancement video; and generating the target person lip synchronization video based on the second target dynamic facial key point and the target person image.

According to this embodiment of this application, the static facial key point in the target person image is converted into the second target dynamic facial key point that is dynamic based on the second key-point mapping relationship, which is equivalent to generating a dynamic facial feature of the target person; and then the target person lip synchronization video is generated based on the second target dynamic facial key point and the target person image, which is equivalent to generating the target person lip synchronization video by combining the dynamic facial feature of the target person with the target person image. This can effectively make a dynamic facial feature of the target person in the generated target person lip synchronization video the same as the enhanced dynamic facial feature in the facial feature enhancement video and synchronous with the target audio, so that the dynamic facial feature in the target person lip synchronization video is more lifelike.

**In** a possible implementation, in the method, the target person lip synchronization video is generated based on the target person image, the target audio, and the driving video by using pre-trained models, and the pre-trained models include a person dynamic video generation model, a lip synchronization model, and a facial feature enhancement model; the migrating a dynamic facial feature of the person in the driving video to the target person image to obtain a target person dynamic video includes: migrating the dynamic facial feature of the person in the driving video to the target person image by using the person dynamic video generation model, to obtain the target person dynamic video; the generating a lip synchronization video based on the target audio and the target person dynamic video includes: generating the lip synchronization video based on the target audio and the target person dynamic video by using the lip synchronization model; and the enhancing the dynamic facial feature in the lip synchronization video and image quality of the lip synchronization video based on the target person image to obtain a target person lip synchronization video includes: enhancing, by using the facial feature enhancement model, the dynamic facial feature in the lip synchronization video based on the target person image to obtain the facial feature enhancement video with the enhanced dynamic facial feature, and migrating, by using the person dynamic video generation model, the dynamic facial feature in the facial feature enhancement video to the target person image to obtain the target person lip synchronization video with the enhanced image quality.

According to this embodiment of this application, a person image, audio, and a video can be separately decoupled from a model. **In** this way, a virtual dynamic figure of the target person can be generated without collecting a large quantity of customized sample videos of the target person to train a specific model to generate a virtual digital human video, and a migration generalization capability is high. Especially, by using dynamic facial feature enhancement and image quality enhancement processes, the target person lip synchronization video can be more lifelike and image quality can be higher, that is, definition and precision are higher.

An embodiment of this application provides a video generation apparatus. The apparatus includes a processor; and a memory, configured to store instructions executable by the processor. When the processor is configured to implement the instructions, the foregoing method is implemented.

An embodiment of this application provides a non-volatile computer-readable storage medium. The computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code is run in a processor in an electronic device, the processor in the electronic device performs the foregoing method.

FIG. 10 is a diagram of a structure of an electronic device 1300 according to an embodiment of this application. As shown in FIG. 10, the electronic device 1300 may be a server or a terminal device, and performs functions in the video generation method shown in FIG. 2. The electronic device 1300 includes at least one processor 1801, at least one memory 1802, and at least one communication interface 1803. In addition, the electronic device may further include an antenna and other general-purpose components, and details are not described herein.

The following details the components of the electronic device 1300 with reference to FIG. 10.

The processor 1801 may be a general-purpose central processing unit (CPU), a microprocessor, an application-specific integrated circuit (application-specific integrated circuit, ASIC), or one or more integrated circuits configured to control execution of the foregoing solution program. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, an Ethernet, a radio access network (RAN), a core network, or a wireless local area network (Wireless Local Area Network, WLAN).

The memory 1802 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM), other compact disc storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of instructions or a data structure and that is accessible to a computer. However, this is not limited thereto. The memory may exist independently, and is connected to the processor through a bus. Alternatively, the memory may be integrated with the processor.

The memory 1802 is configured to store application program code for executing the foregoing solution, and the processor 1801 controls the execution. The processor 1801 is configured to execute the application program code stored in the memory 1802.

In the foregoing embodiments, the descriptions of various embodiments have respective focuses. For a part that is not detailed in an embodiment, refer to related descriptions in other embodiments.

The computer-readable storage medium may be a tangible device that can retain and store instructions used by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read-Only Memory, ROM), an erasable programmable read-only memory (Erasable Programmable Read-Only Memory, EPROM, or flash memory), a static random access memory (Static Random Access Memory, SRAM), a portable compact disk read-only memory (Compact Disc Read-Only Memory, CD-ROM), a digital video disk (Digital Video Disc, DVD), a memory stick, a floppy disk, and a mechanical coding device, for example, a punched card or a groove protrusion structure that stores instructions, and any suitable combination thereof.

Computer-readable program instructions or code described herein may be downloaded to each computing/processing device from a computer-readable storage medium, or downloaded to an external computer or external storage device via a network, for example, an Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions via the network, and forwards the computer-readable program instructions for storage in the computer-readable storage medium in the computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include object-oriented programming languages such as Smalltalk and C++, and conventional procedural programming languages such as a C language or a similar programming language. The computer-readable program instructions may be executed entirely on a user computer, may be executed partially on a user computer as a standalone software package, may be executed partially on a user computer and partially on a remote computer, or may be executed entirely on a remote computer or a server. When a remote computer is involved, the remote computer may be connected to a user computer via any type of network, including a local area network (Local Area Network, LAN) or a wide area network (Wide Area Network, WAN), or may be connected to an external computer (for example, connected by using an Internet service provider through an Internet). In some embodiments, an electronic circuit, for example, a programmable logic circuit, a field-programmable gate array (Field-Programmable Gate Array, FPGA), or a programmable logic array (Programmable Logic Array, PLA), is customized in a personalized manner by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block in the flowcharts and/or block diagrams and a combination of blocks in the flowcharts and/or block diagrams may be implemented by using the computer-readable program instructions.

These computer-readable program instructions may be provided for a processor of a general-purpose computer, a dedicated computer, or another programmable data processing apparatus to produce a machine, so that an apparatus for implementing functions/actions specified in one or more blocks in the flowcharts and/or block diagrams is generated when these instructions are executed by the processor of the computer or the another programmable data processing apparatus. These computer-readable program instructions may be alternatively stored in a computer-readable storage medium. These instructions enable a computer, a programmable data processing apparatus, and/or another device to work in a specific manner, so that the computer-readable medium storing the instructions includes an artifact that includes instructions for implementing various aspects of functions/actions specified in one or more blocks in the flowcharts and/or the block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or block diagrams.

The flowcharts and block diagrams in the accompanying drawings show possible implementations of system architectures, functions, and operations of the apparatus, system, method, and computer program product according to a plurality of embodiments of this application. **In** this regard, each block in the flowcharts or block diagrams may represent a module, a program segment, or a part of instructions, and the module, the program segment, or the part of instructions includes one or more executable instructions for implementing a specified logical function. **In** some alternative implementations, a function marked in a block may be alternatively implemented in a sequence different from that marked in the accompanying drawings. For example, two consecutive blocks may actually be executed substantially concurrently, or may be executed in reverse order sometimes, depending on a function involved.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described herein with reference to embodiments, in a process of implementing the present invention claimed for protection, a person skilled in the art can understand and implement other variations of the disclosed embodiments by viewing the accompanying drawings, the disclosed content, and the appended claims. **In** the claims, the term "comprising" (comprising) does not exclude another component or step, and "a" or "an" does not exclude "a plurality of". A single processor or another unit can implement several functions enumerated in the claims. Some measures are recorded in dependent claims different from each other, but this does not mean that these measures cannot be combined to produce great effect.

The foregoing describes embodiments of this application. The foregoing descriptions are examples, are not exhaustive, and are not limited to the disclosed embodiments. Without departing from the scope of the described embodiments, many modifications and variations are apparent to a person of ordinary skill in the art. Selection of terms used in this specification is intended to best describe principles of embodiments, actual applications, or improvements to technologies in the market, or to enable other persons of ordinary skill in the art to understand embodiments disclosed in this specification.

## Claims

1. A video generation method, comprising:
obtaining a target person image of a target person, target audio that is set for the target person, and a preset driving video, wherein a face of a person in the driving video is dynamic;
migrating a dynamic facial feature of the person in the driving video to the target person image to obtain a target person dynamic video, wherein a face of the target person in the target person dynamic video is dynamic, and the dynamic facial feature comprises at least one of the following: an expression, a motion, and a lip shape;
generating a lip synchronization video based on the target audio and the target person dynamic video, wherein a dynamic facial feature in the lip synchronization video is synchronous with the target audio; and
enhancing the dynamic facial feature in the lip synchronization video and image quality of the lip synchronization video based on the target person image to obtain a target person lip synchronization video.

2. The method according to claim 1, wherein the migrating a dynamic facial feature of the person in the driving video to the target person image to obtain a target person dynamic video comprises:
separately performing key-point detection on the driving video and the target person image to obtain a dynamic facial key point of the person in the driving video and a static facial key point of the target person in the target person image;
determining a first key-point mapping relationship between the driving video and the target person image based on the dynamic facial key point of the person in the driving video and the static facial key point of the target person in the target person image; and
migrating the dynamic facial feature of the person in the driving video to the target person image based on the first key-point mapping relationship to obtain the target person dynamic video.

3. The method according to claim 2, wherein the migrating the dynamic facial feature of the person in the driving video to the target person image based on the first key-point mapping relationship to obtain the target person dynamic video comprises:
converting the static facial key point of the target person in the target person image into a first target dynamic facial key point based on the first key-point mapping relationship, wherein a dynamic facial feature represented by the first target dynamic facial key point is the same as the dynamic facial feature of the person in the driving video; and
generating the target person dynamic video based on the first target dynamic facial key point and the target person image.

4. The method according to claim 1, wherein the enhancing the dynamic facial feature in the lip synchronization video and image quality of the lip synchronization video based on the target person image to obtain a target person lip synchronization video comprises:
enhancing the dynamic facial feature in the lip synchronization video based on the target person image, to obtain a facial feature enhancement video with an enhanced dynamic facial feature; and
migrating the dynamic facial feature in the facial feature enhancement video to the target person image to obtain a target person lip synchronization video with enhanced image quality.

5. The method according to claim 4, wherein the migrating the dynamic facial feature in the facial feature enhancement video to the target person image to obtain a target person lip synchronization video with enhanced image quality comprises:
separately performing key-point detection on the facial feature enhancement video and the target person image to obtain a dynamic facial key point in the facial feature enhancement video and a static facial key point of the target person in the target person image;
determining a second key-point mapping relationship between the facial feature enhancement video and the target person image based on the dynamic facial key point in the facial feature enhancement video and the static facial key point of the target person in the target person image; and
migrating the dynamic facial feature in the facial feature enhancement video to the target person image based on the second key-point mapping relationship to obtain the target person lip synchronization video.

6. The method according to claim 5, wherein the migrating the dynamic facial feature in the facial feature enhancement video to the target person image based on the second key-point mapping relationship to obtain the target person lip synchronization video comprises:
converting the static facial key point of the target person in the target person image into a second target dynamic facial key point based on the second key-point mapping relationship, wherein a dynamic facial feature represented by the second target dynamic facial key point is the same as the dynamic facial feature in the facial feature enhancement video; and
generating the target person lip synchronization video based on the second target dynamic facial key point and the target person image.

7. The method according to any one of claims 1 to 6, wherein in the method, the target person lip synchronization video is generated based on the target person image, the target audio, and the driving video by using pre-trained models, and the pre-trained models comprise a person dynamic video generation model, a lip synchronization model, and a facial feature enhancement model;
the migrating a dynamic facial feature of the person in the driving video to the target person image to obtain a target person dynamic video comprises: migrating the dynamic facial feature of the person in the driving video to the target person image by using the person dynamic video generation model, to obtain the target person dynamic video;
the generating a lip synchronization video based on the target audio and the target person dynamic video comprises: generating the lip synchronization video based on the target audio and the target person dynamic video by using the lip synchronization model; and
the enhancing the dynamic facial feature in the lip synchronization video and image quality of the lip synchronization video based on the target person image to obtain a target person lip synchronization video comprises: enhancing, by using the facial feature enhancement model, the dynamic facial feature in the lip synchronization video based on the target person image to obtain the facial feature enhancement video with the enhanced dynamic facial feature, and migrating, by using the person dynamic video generation model, the dynamic facial feature in the facial feature enhancement video to the target person image to obtain the target person lip synchronization video with the enhanced image quality.

8. A video generation apparatus, wherein the apparatus comprises:
an obtaining module, configured to obtain a target person image of a target person, target audio that is set for the target person, and a preset driving video, wherein a face of a person in the driving video is dynamic;
a migration module, configured to migrate a dynamic facial feature of the person in the driving video to the target person image to obtain a target person dynamic video, wherein a face of the target person in the target person dynamic video is dynamic, and the dynamic facial feature comprises at least one of the following: an expression, a motion, and a lip shape;
a synchronization module, configured to generate a lip synchronization video based on the target audio and the target person dynamic video, wherein a dynamic facial feature in the lip synchronization video is synchronous with the target audio; and
an enhancement module, configured to enhance the dynamic facial feature in the lip synchronization video and image quality of the lip synchronization video based on the target person image to obtain a target person lip synchronization video.

9. A video generation apparatus, comprising:
a processor; and
a memory, configured to store instructions executable by the processor, wherein
when the processor is configured to execute the instructions, the method according to any one of claims 1 to 7 is implemented.

10. A non-volatile computer-readable storage medium, wherein the computer-readable storage medium stores computer program instructions, and when the computer program instructions are executed by a processor, the method according to any one of claims 1 to 7 is implemented.

11. A computer program product, comprising computer-readable code or a non-volatile computer-readable storage medium carrying computer-readable code, wherein when the computer-readable code is run in an electronic device, a processor in the electronic device performs the method according to any one of claims 1 to 7.
